# EUROPEAN PATENT SPECIFICATION

(11) **EP 1 602 997 B1**
(45) Date of publication and mention of the grant of the patent: **17.03.2010**
(21) Application number: 05011612.8
(22) Date of filing: 18.04.2005
(51) Int. Cl.: G05F 1/575, G05F 1/569, G01R 31/02

(54) **Voltage regulator with signal generator having high output impedance**
Spannungsregler mit Signalgenerator mit hoher Ausgangsimpedanz
Régulateur de tension avec générateur de signaux à haute impédance de sortie

(30) Priority: 13.05.2004 US 846717
(43) Date of publication of application: 07.12.2005
(62) Divisional of application: 05008414.4
(73) Proprietor: Marvell World Trade Ltd., St. Michael (BB)
(72) Inventor: Sutardja, Sehat, Los Altos Hills California 94022 (US)
(74) Representative: Grünecker, Kinkeldey, Stockmair & Schwanhäusser Anwaltssozietät

(56) References cited:
- US-A- 5 508 603
- US-A- 5 530 636
- US-A- 5 672 958
- US-A1- 2004 039 423
- US-A1- 2004 075 488

## Description

### TECHNICAL FIELD

The present invention relates to power systems for electronic circuits.

### BACKGROUND

Most modern electronic systems are powered by one or more voltage regulators that provide regulated output power to the system. A typical voltage regulator includes a feedback signal extending from the power input to the system back to the DC/DC converter. The feedback signal is used in the voltage regulator to regulate the output power at the input to the system, thereby reducing error in the regulated output that might be caused by conduction losses between the voltage regulator and the system.

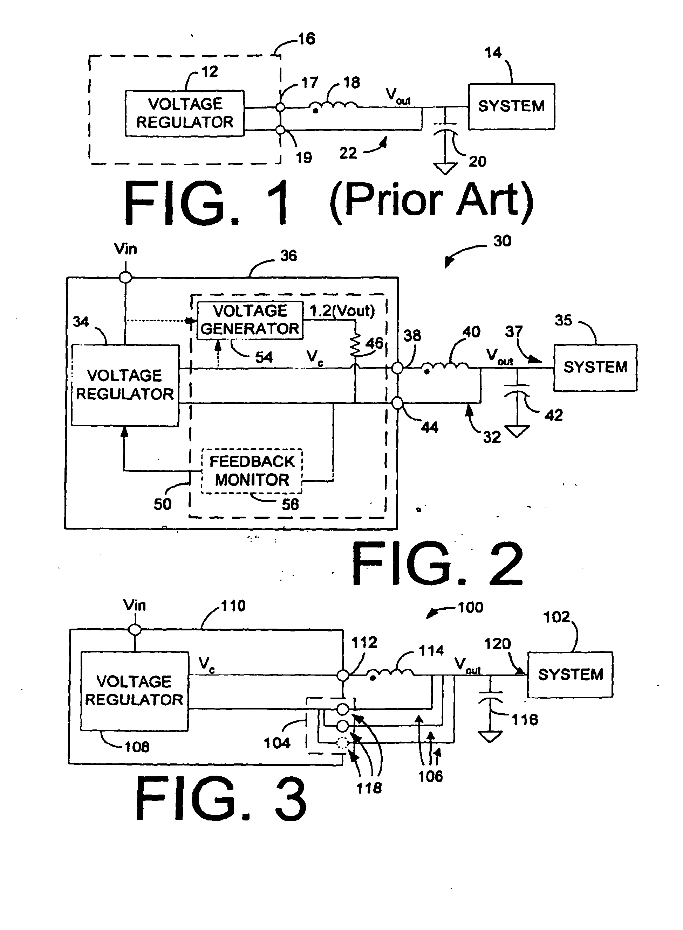

Figure 1 shows a typical conventional feedback system used with a voltage regulator 12 and electronic system 14. An integrated circuit 16 may include the voltage regulator 12 and connect via a pin 17 to external filter components such as an output inductor 18 and output capacitor 20. A feedback signal 22 from the regulated output, Vout, may connect to the voltage regulator via a pin 19. The feedback signal 22 is typically received from a junction of the output inductor 18 and the output capacitor 20 so that gain and phase associated with the filter components is included within the control loop of the voltage regulator 12. The feedback signal may additionally be obtained from a point nearer to the input to the electronic system 14 to minimize the error caused by parasitic effects such as conduction losses and leakage inductance.

Although, sensing the junction of the filter components to generate the feedback signal may improve the stability and accuracy of the regulated output of the voltage regulator 12, if the line carrying the feedback signal becomes electrically degraded, the regulated output may drift outside of the regulation limits causing the voltage regulator 12 to shutdown.
US 5,530,636 discloses an automatic feedback system coupled between both outputs of a dual flyback converter for detecting which output is loaded and for switching between one of two feedback circuits for regulating the voltage of the loaded output. A detection circuit includes a balance voltage divider coupled in series between the two opposite polarity outputs and the voltage divider comprises balanced high impedance resistors to prevent substantial loading. The voltage of the junction between the two resistors shifts away from the loaded output because of an increase of the voltage level of the unloaded output caused by leakage inductance of the switching transformer. The detection circuit also includes a comparator, which detects the voltage shift and asserts its output to a switch circuit, which switches control between the two feedback circuits to control the loop and appropriately regulate the loaded output voltage. The switch circuit is an analog switch including one or more field effect transistors.
US A 5,672,958 relates to a feedback sensing system including a control circuit for detecting power failure of either of two power supplies, and for controlling first and second switch circuits to modify the feedback sensing path of the other supply to the output load. In this manner, when one power supply fails, the feedback is rerouted to the output node to directly monitor and regulate the voltage across the load.

A computer or electronic device receives power from two similar supplies coupled in a parallel configuration. Each of the power supplies includes an input for sensing and regulating the output voltage for control and feedback purposes. Each power supply includes an internal failsafe resistive device or resistor, which provides a failsafe feedback path in the event that the feedback path for the input of the power supply is somehow disconnected or otherwise open circuited . The power supplies have feedback sense nodes .

A switch has one switchable pole connected to the node and another switchable pole coupled to the output node and a common pole connected through a conductor to the input of the power supply. The switch has a control input receiving a signal from the control circuit for switching between the switchable poles to connect the input of the power supply to either the node or to the output node based upon the signal from the control circuit. If the control circuit asserts a low signal, then the node is selected and if the signal is asserted high then the output node is selected. During normal operation, the switch selects the node and the resistor is swamped and thereby does not affect circuit operation

In US A 5,508,603 a remote load is powered by a power supply in response to a PWM IC, the error amp of which is responsive to a voltage feedback signal on remote sense leads from the load. Remote sense leads are applied through a polarity correcting bridge to the input of the error amp. To compensate for broken leads, when the output of the bridge falls below a threshold voltage , a switch operates to connect the input of the error amp to the output of the power supply locally.

As long as the bridge output is more positive than the voltage to the input to the comparator, the output of the comparator is positive, causing a p-channel-MOSFET to remain off. In this situation, the output of the bridge is fed to the input of the error amp through isolation resistors . However, should either of the remote sense leads become open circuited, the bridge will have no output so the comparator output will no longer be positive and the MOSFET will then connect the local output voltage on the lead through the resistor to the input of the error amp. Thus, regulation in response to the local output voltage occurs and the circuit fails softly in a mode which is operational, although of reduced accuracy.

In US 2004/039423 A1 an implanted medical apparatus and external power source use the same coils for energy transfer to the implanted medical device as used for transmission of control signals from the implanted device. In one example, implanted circuitry generates a feedback control signal indicative of the load voltage level of a load-generating medical device and superimposes the feedback signal on an inductor capacitor tank circuit for detection by the external powering apparatus. The external powering apparatus uses the feedback signal to control the energy transfer to the implanted medical device, thus regulating the load voltage at the load generating medical device. The feedback control signal may be a sequence of pulses whose frequency indicates the load voltage level. Other information besides load voltage level may also be transmitted from the implanted device, such as telemetry and logic information.

The present invention provides an integrated circuit comprising a feedback terminal to receive a feedback signal. A voltage regulator has a feedback input to receive the feedback signal from the feedback terminal. The voltage regulator has a power output in communication with an output terminal. The voltage regulator being responsive to the feedback signal, to generate the power output. A signal generator having an output impedance at least ten times greater than an output impedance of the feedback terminal to generate a pull-up signal having an amplitude greater than a voltage amplitude of the power output. The pull-up signal alters a voltage of the feedback signal.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a block diagram of an aspect of a conventional power supply feedback system.

FIG. 2 is a block diagram of a power distribution system that includes an example of a feedback protection system.

FIG. 3 is a block diagram of a power distribution system that includes another example of a feedback protection system.

FIG. 4 is a block diagram of a power distribution system that includes an embodiment of a feedback protection system according to the present invention.

Like reference symbols in the various drawings indicate like elements.

### DETAILED DESCRIPTION

Figure 2 shows a block diagram of an example of a power distribution system 30 for supplying a regulated output voltage, Vout, to a system 35 such as an electronic system. The power distribution system 30 includes a feedback protection system 50 to protect the power distribution system 30 from the potential effects of a feedback line 32 that is electrically degraded from normal operation, wherein electrically degraded is defined as having an increased impedance that causes a feedback signal on the feedback line 32 to be of insufficient quality for the control loop of the power distribution system 30 to control the regulated output voltage. The increased impedance of the feedback line 32 may be due to any cause such as a cold solder joint, the feedback line 32 being partially disconnected from the regulated output voltage, and the feedback line 32 being completely disconnected from the regulated output voltage.

A voltage regulator 34 may generate the regulated output voltage, Vout, from an input voltage, Vin, and supply that regulated output voltage to the system 35. The voltage regulator 34 is at least one of a switching regulator, a linear regulator or other voltage regulator. An integrated circuit 36 may include the voltage regulator 34 and connect via one or more output terminals 38 to external filter components such as an output inductor 40 and output capacitor 42. Any type of terminals may be used for the output terminals 38 such as pins, ball grid arrays, and connectors. The voltage regulator 34 may generate a power output, Vc, that is filtered by the external filter components to generate Vout. The power output, Vc, may be any type of power output to be used for powering the system 35 such as a chopped output of a switching regulator that is filtered by the external filter components, and a DC output from either a switching regulator or a linear regulator.

In one example, the feedback line 32 connects from the regulated output, Vout, to the voltage regulator via one or more feedback terminals 44. Any type of terminals may be used for the feedback terminals 44 such as pins, ball grid arrays, and connectors. A feedback signal carried on the feedback line 32 may be sensed at a junction of the output inductor 40 and the output capacitor 42 such as near an input 37 to the system 35.

In one example, the integrated circuit 36 includes a feedback protection system to protect the system 35 if the feedback line 32 is electrically degraded. In another example, the feedback protection system 50 monitors the feedback line 32 and detect if feedback line 32 is electrically degraded. In one example, the feedback protection system 50 includes a pull-up resistor 46 connected between the feedback line 32 and a pull-up voltage. The pull-up resistor 46 may apply the pull-up voltage through the relatively high impedance of the pull-up resistor 46 to the feedback line 32. The pull-up resistor 46 advantageously causes the output voltage to decrease if the feedback line 32 is electrically degraded.

In one example, when the feedback line 32 is electrically degraded, a voltage that is greater than Vout is applied through the pull-up resistor 46 to the voltage regulator 34 causing the control loop of the voltage regulator 32 to reduce the conduction time of the converter 32 leading to a decrease in the output voltage. Conventional DC/DC converters that have a disconnected feedback line is electrically degraded, typically generate a greater output voltage that may cause an overvoltage circuit to trigger, leading to shutdown of the converter. The feedback protection circuit 50 may advantageously operate if the feedback line 32 is electrically degraded to cause the control loop of the voltage regulator 32 to decrease the output voltage instead of relying on a overvoltage protection circuit. In addition, the feedback protection circuit 50 may cause the output voltage to decrease without first increasing.

In another example, if the feedback line 32 is electrically degraded from the integrated circuit 36 the pull-up voltage that is applied through the pull-up resistor 46 is high enough to cause the overvoltage circuit in the voltage regulator 34 to trigger an overvoltage shutdown of the voltage regulator 34 causing the output voltage to decrease to approximately zero volts. Although the overvoltage circuit operates to shutdown the voltage regulator 34 if the feedback line 32 is electrically degraded, the output voltage does not initially increase, but instead initially decreases. Although the shutdown circuit eventually causes the voltage regulator 34 to shutdown, the initial decrease in the output voltage may be due to operation of either the control loop or the overprotection circuit depending on their relative speed of operation.

The pull-up resistor 46 may be any suitable resistance to pull-up the feedback line 32 to approximately the pull-up voltage if the feedback line 32 is electrically degraded. Exemplary values of the resistance may range from approximately 100 ohms to lmeg ohms, although the resistance may be greater than or less than this range depending on several design factors such as the differential between the pull-up voltage and the output voltage, and the impedance of interface circuits that connect to the pull-up resistor 46. Although only a single pull-up resistor 46 is shown, another pull-up resistor may be coupled to a feedback return line if differential feedback sensing is employed.

In one example, a voltage generator 54 generates the pull-up voltage that is applied to the pull-up resistor 46. The pull-up voltage may be any voltage that is greater than Vout such as a voltage that is approximately 20% greater than Vout. Any energy source may be used for generating the pull-up voltage such as the input voltage, Vin, and voltages from the voltage regulator 34.

In one example, a feedback monitor 56 monitors the feedback line 32 within the integrated circuit 50 to detect if the portion of the feedback line 32 extending from the regulated output voltage through the feedback terminal 44 is electrically degraded. The feedback monitor 56 may communicate a feedback degraded signal to the voltage regulator 34 to indicate that the feedback line 32 has an increased impedance. In one aspect, the feedback monitor 56 may compare the voltage on a portion of the feedback line 32 internal to the integrated circuit 36 to a reference voltage to determine if the feedback line 32 is electrically degraded.

Figure 3 shows an example of a power distribution system 100 for supplying a regulated output voltage, Vout, to a system 102 such as an electronic system. The power distribution system 100 includes a feedback protection system 104 to protect the power distribution system 100 from the potential effects of a feedback line 106 that is electrically degraded from normal operation, wherein electrically degraded is defined as having an increased impedance that causes a feedback signal on the feedback line 106 to be of insufficient quality for the control loop of the power distribution system 100 to control the regulated output voltage. The increased impedance of the feedback line 106 may be due to any cause such as a cold solder joint, the feedback line 106 being partially disconnected from the regulated output voltage, and the feedback line 106 being completely disconnected from the regulated output voltage..

In one example, a voltage regulator 108 generates the regulated output voltage, Vout, from an input voltage, Vin, and supply that regulated output voltage to the system 102. The voltage regulator 108 may be any type of voltage regulator such as switching regulators and linear regulators. An integrated circuit 110 may include the voltage regulator 108 and connect via one or more output terminals 112 to external filter components such as an output inductor 114 and output capacitor 116. The voltage regulator 108 may generate a power output, Vc, that is filtered by the external filter components to generate Vout. The power output, Vc, may be any type of power output to be used for powering the system 35 such as a chopped output of a switching regulator that is filtered by the external filter components, and a DC output from either a switching regulator or a linear regulator.

In one example, multiple feedback lines 106 connect from the regulated output, Vout, to the voltage regulator via two or more feedback terminals 118. A feedback signal carried on the feedback lines 106 may be sensed at a junction of the output inductor 114 and the output capacitor 116 such as near an input 120 to the system 102. The feedback protection system 104 may comprise the feedback terminals 118 and interconnection of the feedback terminals 118 within the integrated circuit 110. The feedback protection system 104 advantageously provides redundant feedback lines 106 and feedback terminals 118 to prevent the electrical degradation of any one of the feedback lines from affecting the operation of the voltage regulator 108. For example, if there is a cold solder joint at one of the feedback terminals 118 causing the impedance of the associated feedback line 106 to increase, the other feedback line(s) 106 and feedback pin(s) 106 provide a redundant low impedance path for the feedback signal.

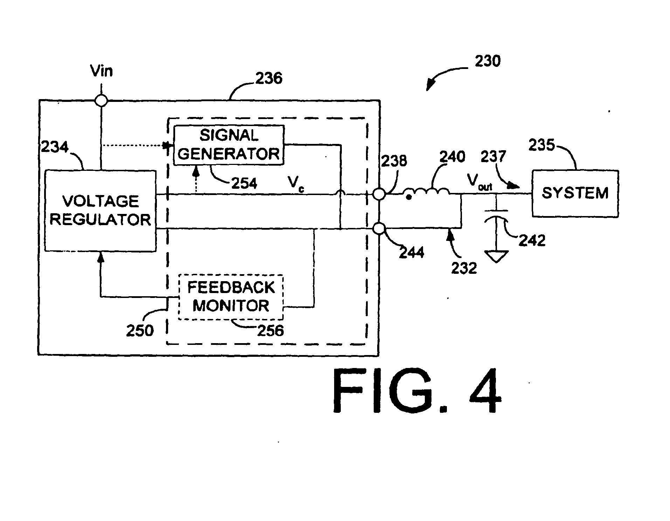

Figure 4 shows an embodiment of a power distribution system 230 according to the present invention for supplying a regulated output voltage, Vout, to a system 235 such as an electronic system. The power distribution system 230 is similar to power distribution system 30 in function with corresponding elements numbered in the range 230-260, except that the power distribution system 230 includes a signal generator 254 instead of the voltage generator 54 and the pull-up resistor 46.

The signal generator 254 may be any type of high impedance signal generator such as a current generator, and a voltage generator with a series resistor. The output impedance of the signal generator is selected to be sufficiently high to not load down the source of the feedback signal. For example, if the feedback signal is derived from an inductor-capacitor filter such as inductor 240 and capacitor 242 the source impedance of the inductor-capacitor filter is very low, being approximately 0 ohms, therefore the output impedance may be any impedance greater than approximately 10 ohms.

The signal generator 254 may be any type of source including an alternating current (AC) source and a direct current (DC) source. In one embodiment, when the signal generator 254 is an AC source, a tone detector may monitor the feedback input of the voltage regulator 234 to detect an AC signal from the AC source, which indicates a degraded electrical condition of the feedback line 232 and feedback terminal 244. In one aspect, the feedback monitor 256 may comprise the tone detector.

## Claims

1. An integrated circuit (30) comprising;
an output terminal (38, 238);
a feedback terminal (44, 244) to receive a feedback signal (32, 232) from the output terminal (38, 238);
a voltage regulator (34, 234) having a feedback input to receive the feedback signal (32, 232) from the feedback terminal;
the voltage regulator having an output in communication with the output terminal, the voltage regulator being responsive to the feedback signal, to generate and regulate the output of the voltage regulator to an output voltage;
**characterized by**
a signal generator (254) having an output impedance at least ten times greater than an output impedance of the feedback terminal (44, 244), the signal generator to generate a pull-up signal that is received by the feedback input and that has an amplitude that is greater than a voltage amplitude of the output voltage,
wherein said pull-up signal alters voltage of said feedback signal (32, 232).

2. The integrated circuit of claim 1 wherein the signal generator (254) is selected from a group consisting of a current source, and a voltage source with an output resistor.

3. The integrated circuit of claim 1 wherein the signal generator is selected from a group consisting of a direct current (DC) source and an alternating current (AC) source.

4. The integrated circuit of claim 1 further comprising a filter to generate a regulated output voltage from the output of the voltage regulator; and
wherein the feedback signal is derived from the regulated output voltage.

5. The integrated circuit of claim 2 included in a power distribution system comprising a feedback line to conduct the feedback signal from the regulated output voltage to the feedback terminal.

6. The integrated circuit of claim 1 included in a power distribution system comprising external filter components coupled to the output terminal;
the external filter components comprising an output inductor and an output capacitor to filter the output of the voltage regulator to generate a regulated output voltage;
wherein the feedback signal is derived from the regulated output voltage.

7. The integrated circuit of claim 1 wherein the voltage regulator is selected from a group consisting of a switching regulator and a linear regulator.

8. The integrated circuit of claim 5 further comprising a feedback monitor to detect an electrically degraded connection between the feedback terminal and the regulated output voltage.

9. The integrated circuit of claim 8 wherein the power output has an amplitude; and
wherein the electrically degraded connection is defined as having an increased impedance that causes the feedback signal to be of insufficient quality for the voltage regulator to control the amplitude of the power output.

10. The integrated circuit of claim 8 wherein the electrically degraded connection is selected from a group consisting of a cold solder joint, the feedback line being partially disconnected from the regulated output voltage, and the feedback line being completely disconnected from the regulated output voltage.

11. The integrated circuit of claim 8 wherein the feedback monitor compares a voltage on the feedback terminal to a reference voltage to detect the electrically degraded connection.

12. The integrated circuit of claim 1 wherein the integrated circuit further comprises at least two feedback terminals to each receive the feedback signal.

13. The integrated circuit of claim 12 included in a power distribution system comprising;
a filter to generate a regulated output voltage from the power output; and
redundant feedback lines coupled between the regulated output voltage and the at least two feedback terminals of the integrated circuit to conduct the feedback signal.

14. The integrated circuit of claim 12 further comprising an interconnection circuit to interconnect the feedback terminals.

15. The integrated circuit of claim 1 wherein the pull-up signal is derived separately from the output voltage of the voltage regulator (234).

16. The integrated circuit of claim 8 wherein the signal generator generates the pull-up signal based on the detection of the electrically degraded connection.

## Patentansprüche

1. Integrierte Schaltung (30), umfassend:
einen Ausgangsanschluss (38, 238);
einen Rückkopplungsanschluss (44, 244) zum Empfangen eines Rückkopplungssignals (32, 232) von dem Ausgangsanschluss (38, 238);
einen Spannungsregler (34, 234) mit einem Rückkopplungseingang zum Empfangen des Rückkopplungssignals (32, 232) von dem Rückkopplungsanschluss;
wobei der Spannungsregler einen Ausgang hat, der mit dem Ausgangsanschluss in Verbindung steht, und der Spannungsregler auf das Rückkopplungssignal anspricht, um den Ausgang des Spannungsreglers auf eine Ausgangsspannung zu erzeugen und zu regeln bzw. regulieren;
**gekennzeichnet durch**
einen Signalgenerator (254) mit einer Ausgangsimpedanz, die wenigstens zehnmal größer als eine Ausgangsimpedanz des Rückkopplungsanschlusses (44, 244) ist, wobei der Signalgenerator dem Erzeugen eines Pull-up-Signals dient, das von dem Rückkopplungseingang empfangen wird und das eine Amplitude aufweist, die größer als eine Spannungsamplitude der Ausgangsspannung ist,
wobei das Pull-up-Signal eine Spannung des Rückkopplungssignals (32, 232) ändert.

2. Integrierte Schaltung nach Anspruch 1, wobei der Signalgenerator (254) aus einer Gruppe ausgewählt wird, die aus einer Stromquelle und einer Spannungsquelle mit einem Ausgangswiderstand besteht.

3. Integrierte Schaltung nach Anspruch 1, wobei der Signalgenerator aus einer Gruppe ausgewählt wird, die aus einer Gleichstromquelle (DC) und einer Wechselstromquelle (AC) besteht.

4. Integrierte Schaltung nach Anspruch 1, des Weiteren umfassend ein Filter zum Erzeugen einer geregelten bzw. regulierten Ausgangsspannung von dem Ausgang des Spannungsreglers; wobei das Rückkopplungssignal von der geregelten bzw. regulierten Ausgangsspannung abgeleitet wird.

5. Integrierte Schaltung nach Anspruch 2, die in einem Stromverteilungssystem enthalten ist, das eine Rückkopplungsleitung zum Leiten des Rückkopplungssignals von der geregelten bzw. regulierten Ausgangsspannung zu dem Rückkopplungsanschluss umfasst.

6. Integrierte Schaltung nach Anspruch 1, die in einem Stromverteilungssystem enthalten ist, das externe Filterkomponenten umfasst, die mit dem Ausgangsanschluss gekoppelt sind;
wobei die externen Filterkomponenten einen Ausgangsinduktor und einen Ausgangskondensator zum Filtern des Ausgangs des Spannungsreglers umfassen, um eine geregelte bzw. regulierte Ausgangsspannung zu erzeugen;
wobei das Rückkopplungssignal von der geregelten bzw. regulierten Ausgangsspannung abgeleitet wird.

7. Integrierte Schaltung nach Anspruch 1, wobei der Spannungsregler aus einer Gruppe ausgewählt wird, die aus einem Schaltregler und einem Linearregler besteht.

8. Integrierte Schaltung nach Anspruch 5, des Weiteren umfassend eine Rückkopplungsüberwachungseinrichtung zum Erfassen einer elektrisch geschwächten Verbindung zwischen dem Rückkopplungsanschluss und der geregelten bzw. regulierten Ausgangsspannung.

9. Integrierte Schaltung nach Anspruch 8, wobei der Leistungsausgang eine Amplitude hat;
wobei die elektrisch geschwächte Verbindung **dadurch** definiert ist, dass sie eine erhöhte Impedanz aufweist, die bewirkt, dass die Qualität des Rückkopplungssignals für den Spannungsregler zum Steuern der Amplitude des Leistungsausganges nicht ausreicht.

10. Integrierte Schaltung nach Anspruch 8, wobei die elektrisch geschwächte Verbindung aus einer Gruppe ausgewählt wird, die aus einer kalten Lötstelle, einer teilweisen Trennung der Rückkopplungsleitung von der geregelten bzw. regulierten Ausgangsspannung und einer vollständigen Trennung der Rückkopplungsleitung von der geregelten bzw. regulierten Ausgangsspannung besteht.

11. Integrierte Schaltung nach Anspruch 8, wobei die Rückkopplungsüberwachungseinrichtung eine Spannung an dem Rückkopplungsanschluss mit einer Bezugsspannung vergleicht, um die elektrisch geschwächte Verbindung zu erfassen.

12. Integrierte Schaltung nach Anspruch 1, wobei die integrierte Schaltung des Weiteren wenigstens zwei Rückkopplungsanschlüsse umfasst, die jeweils das Rückkopplungssignal empfangen.

13. Integrierte Schaltung nach Anspruch 12, die in einem Stromverteilungssystem enthalten ist, das umfasst: ein Filter zum Erzeugen einer geregelten bzw. regulierten Ausgangsspannung von dem Leistungsausgang; und
redundante Rückkopplungsleitungen, die zwischen die geregelte bzw. regulierte Ausgangsspannung und die wenigstens zwei Rückkopplungsanschlüsse der integrierten Schaltung gekoppelt sind, um das Rückkopplungssignal zu leiten.

14. Integrierte Schaltung nach Anspruch 12, die des Weiteren eine Verbindungsschaltung zum Verbinden der Rückkopplungsanschlüsse miteinander umfasst.

15. Integrierte Schaltung nach Anspruch 12, wobei das Pull-up-Signal getrennt von der Ausgangsspannung des Spannungsreglers (234) abgeleitet wird.

16. Integrierte Schaltung nach Anspruch 8, wobei der Signalgenerator das Pull-up-Signal auf Grundlage der Erfassung der elektrisch geschwächten Verbindung erzeugt.

## Revendications

1. Circuit intégré (30) comprenant :
une borne de sortie (38, 238) ;
une borne de rétroaction (44, 244) pour recevoir un signal de rétroaction (32, 232) issu de cette borne de sortie (38, 238) ;
un régulateur de tension (34, 234) ayant une entrée de rétroaction pour recevoir le signal de rétroaction (32, 232) issu de la borne de rétroaction ;
le régulateur de tension ayant une sortie en communication avec la borne de sortie, le régulateur de tension étant réactif au signal de rétroaction, pour générer et réguler la sortie du régulateur de tension et produire une tension de sortie ;
**caractérisé par**
un générateur de signaux (254) ayant une impédance de sortie au moins dix fois supérieure à l'impédance de sortie de la borne de rétroaction (44, 244), ce générateur de signaux devant générer un signal de rappel qui est reçu par l'entrée de rétroaction et qui a une amplitude supérieure à une amplitude de tension de la tension de sortie,
ledit signal de rappel altérant la tension dudit signal de rétroaction (32, 232).

2. Circuit intégré selon la revendication 1, dans lequel le générateur de signaux (254) est choisi dans un groupe constitué d'une source de courant et d'une source de tension avec une résistance de sortie.

3. Circuit intégré selon la revendication 1, dans lequel le générateur de signaux est choisi dans un groupe constitué d'une source de courant continu (CC) et d'une source de courant alternatif (CA).

4. Circuit intégré selon la revendication 1 comprenant en outre un filtre pour générer une tension de sortie régulée issue de la sortie du régulateur de tension ; et
dans lequel le signal de rétroaction est dérivé de la tension de sortie régulée.

5. Circuit intégré selon la revendication 2 inclus dans un système de distribution de puissance comprenant une ligne de rétroaction pour conduire le signal de rétroaction issue de la tension de sortie régulée vers la borne de rétroaction.

6. Circuit intégré selon la revendication 1, inclus dans un système de distribution de puissance comprenant des composants de filtre externes couplés à la borne de sortie ;
les composants de filtre externes comprenant un inducteur de sortie et un condensateur de sortie pour filtrer la sortie du régulateur de tension afin de générer une tension de sortie régulée ;
le signal de rétroaction étant dérivé de la tension de sortie régulée.

7. Circuit intégré selon la revendication 1, dans lequel le régulateur de tension est choisi dans un groupe constitué d'un régulateur à découpage et d'un régulateur linéaire.

8. Circuit intégré selon la revendication 5, comprenant un moniteur de rétroaction pour détecter une connexion électriquement dégradée entre la borne de rétroaction et la tension de sortie régulée.

9. Circuit intégré selon la revendication 8, dans lequel la puissance de sortie a une amplitude ; et dans lequel la connexion électriquement dégradée est définie comme ayant une impédance accrue qui amène le signal de rétroaction à avoir une qualité insuffisante pour le régulateur de tension pour contrôler l'amplitude de la puissance de sortie.

10. Circuit intégré selon la revendication 8, dans lequel la connexion électriquement dégradée est choisie dans un groupe constitué d'une soudure froide, la ligne de rétroaction étant partiellement déconnectée de la tension de sortie régulée, et la ligne de rétroaction étant complètement déconnectée de la tension de sortie régulée.

11. Circuit intégré selon la revendication 8, dans lequel le moniteur de rétroaction compare une tension sur la borne de rétroaction à une tension de référence pour détecter la connexion électriquement dégradée.

12. Circuit intégré selon la revendication 1, dans lequel le circuit intégré comprend en outre au moins deux bornes de rétroaction pour recevoir chacune le signal de rétroaction.

13. Circuit intégré selon la revendication 12, inclus dans un système de distribution de puissance comprenant :
un filtre pour générer une tension de sortie régulée à partir de la puissance de sortie ; et
des lignes de rétroaction redondantes couplées entre la tension de sortie régulée et les au moins deux bornes de rétroaction du circuit intégré pour conduire le signal de rétroaction.

14. Circuit intégré selon la revendication 12, comprenant en outre un circuit d'interconnexion pour interconnecter les bornes de rétroaction.

15. Circuit intégré selon la revendication 1, dans lequel le signal de rappel est dérivé séparément de la tension de sortie du régulateur de tension (234).

16. Circuit intégré selon la revendication 8, dans lequel le générateur de signaux génère le signal de rappel en se basant sur la détection de la connexion électriquement dégradée.
